# EUROPEAN PATENT APPLICATION

(11) **EP 3 457 162 A1**
(43) Date of publication of application: **20.03.2019**
(21) Application number: 17795792.5
(22) Date of filing: 23.02.2017
(51) Int. Cl.: G01S 5/02, G01S 13/74, G01S 19/48, G06Q 10/06

(54) **POSITION MEASUREMENT DEVICE**

(30) Priority: 11.05.2016 JP 2016095521
(71) Applicant: Alps Electric Co., Ltd., Tokyo 145-8501 (JP)
(72) Inventor: WAKANA, Keigo, Tokyo 145-8501 (JP); YAMADA, Yukimitsu, Tokyo 145-8501 (JP); TAKAI, Daisuke, Tokyo 145-8501 (JP)
(74) Representative: Schmitt-Nilson Schraud Waibel Wohlfrom Patentanwälte Partnerschaft mbB
(86) International application number: PCT/JP2017/006853
(87) International publication number: WO 2017/195431

(57) **Abstract**

[Problem] To provide a position measurement apparatus capable of accurately detecting the position of a target object in a wide measurement area.

[Solution] A mobile station M is moved close to a mobile terminal unit 20 as a target object. In ST1, the absolute position of the mobile station M in an absolute coordinate system (Abs) set in a measurement area is calculated. In ST2, the relative position of the mobile terminal unit 20 in a relative coordinate system (Rel) set by the mobile station M is detected. In ST3, the orientation of the mobile station M in the absolute coordinate system (Abs) is detected. In ST4, the relative coordinate system (Rel) is rotated. In ST5, the absolute position of the mobile terminal unit 20 in the absolute coordinate system (Abs) is specified.

## Description

### BACKGROUND OF THE INVENTION

### 1. Field of the Invention

The present invention relates to a position measurement apparatus capable of determining with high precision a position of a target object in a relatively wide range of a measurement area.

### 2. Description of the Related Art

An invention related to a position determination in a wireless communication system is described in Patent Document 1. In this invention, a position of a mobile station moving in a measurement area, which is a cellular network, is determined.

In the invention described in Patent Document 1, the basic idea is that the position of the mobile station is determined by a satellite positioning system such as GPS and SPS. It should be noted, however, that the position of the mobile station cannot be determined according to the satellite positioning system when the mobile station is moving inside of a building or in a tunnel. In this case, the position of the mobile station is calculated by having communications between the mobile station and multiple base stations included in the cellular network and by having the mobile station receiving signal propagation delay information.

### [Citation List]

### [Patent Document]

[Patent Document 1] Japanese Unexamined Patent Application Publication No. 2015-155909

### SUMMARY OF THE INVENTION

### [TECHNICAL PROBLEM]

In the invention described in Patent Document 1, accuracy of determining a position of the mobile station is increased by using not only the satellite positioning system but also radio waves from the base stations of the cellular network that is used as a communication system for existing mobile telephones, or the like.

In the above-noted invention, although it is possible to calculate a position of a mobile station moving in a building or a tunnel, the mobile station is limited to a vehicle on which a communication device for communicating with the satellite positioning system and base stations is mounted, and thus, the above-noted invention is not appropriate to be used for determining a position of a simpler mobile terminal unit.

Further, because base stations included in the cellular network are far away from the mobile station, a position of a base station may not be determined with high precision using signal propagation delay information that is transmitted by the base station and received by the mobile station.

In view of the above-described problem, an object of the present invention is to provide a position measurement apparatus capable of detecting a position of a target object with high precision in a wide range of a measurement area.

### [SOLUTION TO PROBLEM]

The present invention provides a position measurement apparatus for determining a position of a target object arranged in a measurement area, the position measurement apparatus including: a mobile station configured to move in the measurement area; an absolute position measurement unit configured to measure an absolute position of the mobile station in the measurement area; and a relative position measurement unit configured to measure a relative position of the target object with respect to the mobile station, wherein an absolute position of the target object in the measurement area is determined from a measurement value of the absolute position and a measurement value of the relative position.

In a position measurement apparatus of the present invention, the absolute position measurement unit is a satellite positioning system mounted on the mobile station.

In a position measurement apparatus of the present invention, the relative position measurement unit includes a direction sensor that detects a direction of the mobile station and a position determination unit that determines a position of the target object in a relative coordinate system with respect to the mobile station.

In a position measurement apparatus of the present invention, the position determination unit is an RF transmission and reception unit disposed between the mobile station and the target object.

It is preferable that, in the position measurement apparatus of the present invention, the target object includes an inertial sensor and that the movement history of the target object in the measurement area is calculated from the relative position, measured by the relative position measurement unit, of the target object with respect to the mobile station and from the movement information of the target object detected by the inertial sensor.

Further, a position measurement apparatus of the present invention is characterized: by the target object being a mobile terminal unit held by a person; by the number of steps being counted by the inertial sensor; by a step width of the person being calculated from a relative position, which is measured by the relative position measurement unit, of the target object with respect to the mobile station and the number of steps; and by a movement distance of the mobile terminal unit, which cannot be measured by the relative position measurement unit in an area, being adjusted by the step width and the number of steps.

In a position measurement apparatus of the present invention, the person is, for example, a driver who drives a vehicle in the measurement area, the mobile station is a truck that carries the driver who has got out of the vehicle, and a parking position of the vehicle is determined by measuring a position of the mobile terminal unit held by the driver who has got out of the vehicle.

### [ADVANTAGEOUS EFFECTS OF INVENTION]

In the present invention, an absolute position of the target object in the measurement area is determined by determining an absolute position of the mobile station in the measurement area, and by calculating a relative position of the target object with respect to the mobile station. It is possible to detect a relative position of the target object with high accuracy by having the mobile station close to the target object, and thus, it is possible to determine an absolute position of the target object in the measurement area with high accuracy.

Further, even when a relative position of the target object with respect to the mobile station cannot be detected with high accuracy because the target object is hidden from the mobile station, it is possible to obtain movement information of the target object from detection outputs of an inertial sensor by having the inertial sensor included in the target object.

### BRIEF DESCRIPTION OF THE DRAWINGS

Fig. 1 is a drawing illustrating an overall structure of a position measurement apparatus of the present invention.
Fig. 2 is a drawing illustrating a relative position of a target object with respect to a mobile station in the position measurement apparatus of the present invention.
Fig. 3 is a block diagram of the position measurement apparatus of the present invention.
Fig. 4 is a flowchart illustrating a basic measurement operation of the position measurement apparatus of the present invention.
Fig. 5 is a flowchart illustrating a further detailed measurement operation of the position measurement apparatus of the present invention.
Fig. 6 is a flowchart illustrating a further detailed measurement operation of the position measurement apparatus of the present invention.

### DETAILED DESCRIPTION OF THE PREFERRED EMBODIMENTS

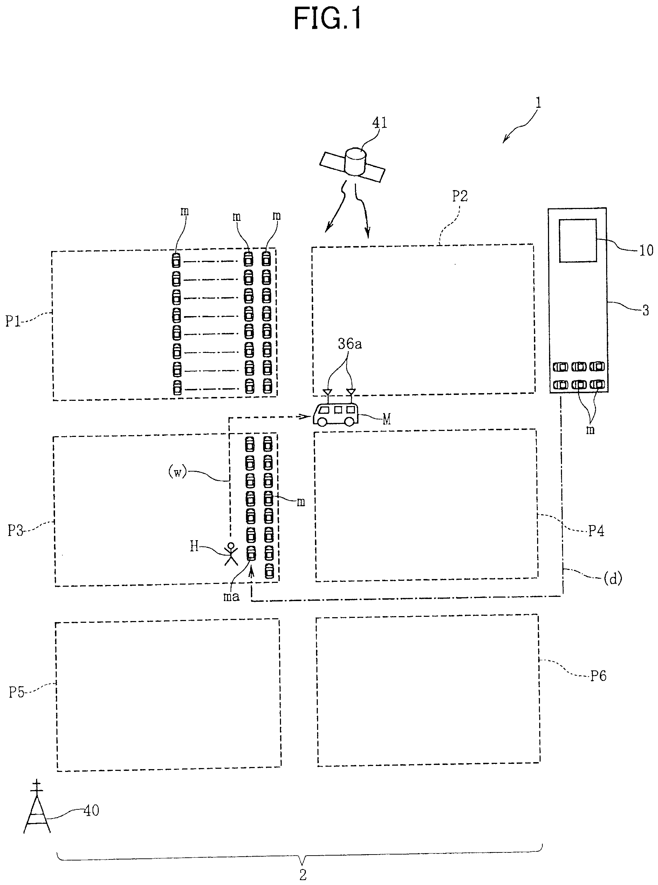

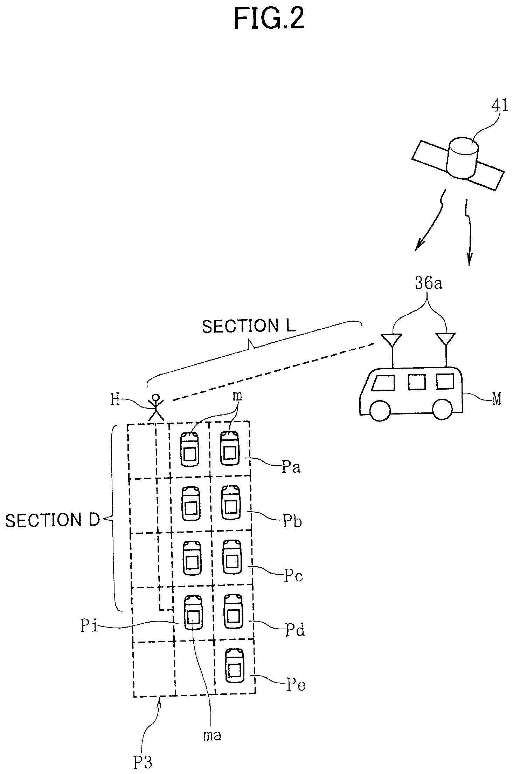

Fig. 1 illustrates an overall structure of a position measurement apparatus 1 according to an embodiment of the present invention. The position measurement apparatus 1 includes a measurement area 2. The measurement area 2 is, for example, a waiting area of vehicles m with an area equal to or greater than 1 km2. The measurement area 2 is divided into waiting blocks P1, P2, P3, P4, P5, and P6. Many vehicles m waiting for exportation and many vehicles m that have been imported are parked in waiting blocks systematically. Each of the waiting blocks P1, P2, P3, P4, P5, and P6 is further divided into a plurality of vehicle parking spaces, and each of the vehicle parking spaces is provided with a code indicating its position. Fig. 2 illustrates an enlarged part of the waiting block P3, and parking spaces of the waiting block P3 are provided with codes, for example, Pa, Pb, Pc, Pd, etc., respectively.

A bring-in area 3 is provided on one side of the measurement area 2. Brought-in vehicles m are parked sequentially in the bring-in area 3. A driver (person) H, who is a worker in the measurement area 2, gets on a specified vehicle ma among the vehicles m parked in the bring-in area 3. The driver drives the vehicle ma along a driving route (d), moves the vehicle ma to a specified parking space, and parks the vehicle ma in the specified parking space. In an embodiment of the present invention, as illustrated in Fig. 2, the specified vehicle ma is parked at a parking space Pi in the waiting block P3.

There is a mobile station (truck) M moved to near the driver H who has gotten out of the vehicle ma that has been parked at the parking space Pi. The driver H gets on the mobile station M together with another driver, returns to the bring-in area 3, and moves another specified vehicle to a parking space. The driver H performs the above-described job repeatedly.

A position measurement apparatus 1 according to an embodiment of the present invention performs management of the entire measurement area 2 by determining which vehicle m is parked at which parking space of which waiting block P1, P2, P3, P4, P5, P6, ....

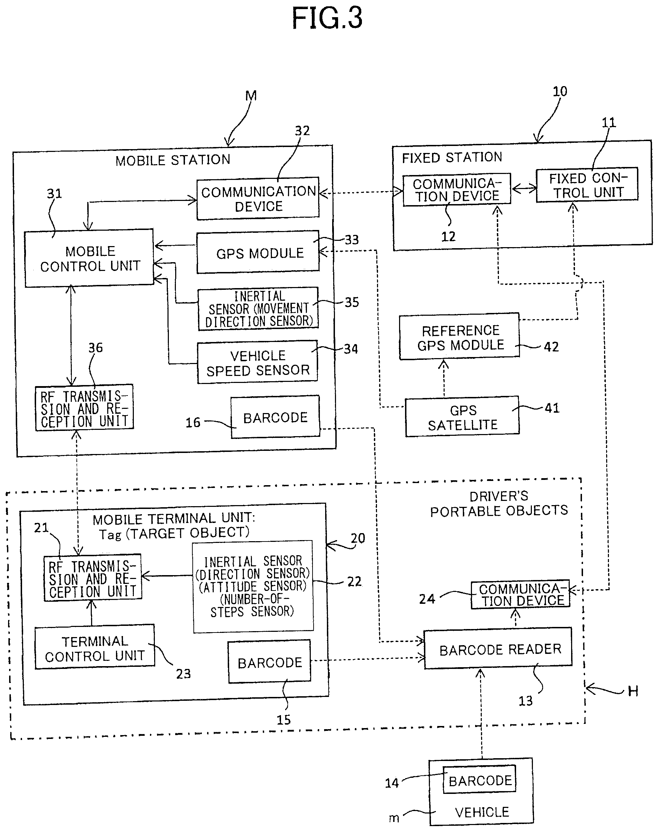

Fig. 3 illustrates a functional block diagram of units included in the position measurement apparatus 1. As illustrated in Fig. 1, there is a fixed station 10 near the bring-in area 3. A planar absolute coordinates (Abs), which is an orthogonal coordinates system (X-Y coordinates system), is set in the measurement area 2. An origin (reference position) of the absolute coordinates system (Abs) may be set at any position. The origin (reference position) of the absolute coordinates system (Abs) is set at a predetermined position in the fixed station 10.

As illustrated in Fig. 3, the fixed station 10 includes a fixed control unit 11. The fixed control unit 11 manages the entire measurement area 2, and includes mainly a CPU and a memory. A communication device 12 used for communicating with the mobile station M is mounted on the fixed station 10.

The driver H carries a mobile terminal unit (Tag) 20, a barcode reader 13, and a communication device 24 attached to the barcode reader 13. A barcode 15 is attached to the mobile terminal unit 20. When the driver H carries the mobile terminal unit 20, the driver H reads the barcode 15 with the barcode reader 13. A barcode 14 is also allocated to (attached to) each vehicle m that is brought in the bring-in area 3. When the driver holding the mobile terminal unit 20 gets on a specified vehicle ma in the bring-in area 3, the driver H reads the barcode 14 of the vehicle ma with the barcode reader 13 held by the driver H.

The code of the barcode 15 of the mobile terminal unit 20 and the code of the barcode 14 of the specified vehicle ma, which have been read by the barcode reader 13, are transmitted to the communication device 12 of the fixed station 10 from the communication device 24 carried by the driver H. These codes are transmitted to the fixed control unit 11 from the communication device 12, and thus, the mobile terminal unit 20 and the vehicle m are associated with each other by the fixed control unit 11.

The mobile terminal unit (Tag) 20 is a "target object" whose position is measured by the position measurement apparatus 1. When the driver H gets out of the vehicle ma after moving the vehicle ma to a certain parking space, the position of the mobile terminal unit 20 held by the driver H is determined as an absolute position in the absolute coordinates system (Abs) set in the measurement area 2. With the above operation, it is possible for the fixed control unit 22 to manage (determine) the parking space among the many parking spaces at which the specified vehicle ma is parked.

Different mobile terminal units 20 may be used for different vehicles m in a one-to-one relationship. Alternatively, the driver H may continue using the same mobile terminal unit 20 while moving many vehicles m.

As illustrated in Fig. 3, the mobile station M includes a mobile control unit 31. The mobile control unit 31 includes mainly a CPU and a memory. A planar orthogonal coordinates system (X-Y coordinates system) with reference to the mobile station M is set as a relative coordinate system (Rel) by the mobile control unit 31. An origin of the relative coordinate system (Rel) is set in the mobile station (truck) M, for example, X-axis is set in a front direction toward the traveling direction of the mobile station M, and Y-axis is set in a direction orthogonal to the traveling direction.

There is a communication device 32 in the mobile station M. Various information items are transmitted from the mobile station M to the fixed station 10 through communications between the communication device 32 and the communication device 12. The communication devices 12 and 32 are RF communication devices or microwave communication devices.

A GPS module 33 as an absolute position measurement unit is mounted on the mobile station M. The GPS module 33 is provided as a part of a satellite positioning system. The satellite positioning system may be an SPS system. As illustrated in Fig. 1, there is another fixed station 40 in the measurement area 2 and the other fixed station 40 includes a referential GPS module 42. Positioning radio waves from a plurality of GPS satellites 41 are detected by the GPS module 33 mounted on the mobile station M and by the referential GPS module 42.

Coordinate position information detected and calculated by the referential GPS module 42 is transmitted to at least one of the mobile control unit 31 and the fixed control unit 11. The coordinate position of the mobile station M in the absolute coordinates system (Abs) is calculated, by the mobile control unit 31 or the fixed control unit 11, with high precision from the coordinate position information detected and calculated by the GPS module 33 mounted on the mobile station M and the coordinate position information detected and calculated by the referential GPS module 42. The coordinate position information calculated by the mobile control unit 31 is transmitted to the fixed control unit 11 using the communication devices 32 and 12.

As illustrated in Fig. 3, a vehicle speed sensor 34 and an inertial sensor 35 are mounted on the mobile station M. The inertial sensor 35 is a gyro sensor for detecting angular velocity, which also functions as a direction sensor. The vehicle speed sensor 34 and the inertial sensor 35 function as parts of the absolute position measurement unit. Information of a moving position or a direction of the mobile station M in the absolute coordinates system (Abs) detected by the GPS module 33 is adjusted by detected outputs from the vehicle speed sensor 34 and the inertial sensor 35.

There are a plurality of RF transmission and reception units 36 in the mobile station M. A relative position measurement unit includes the RF transmission and reception units 36 and the inertial sensor (direction sensor) 35. Other than the gyro sensor, a geomagnetic sensor may be used as the inertial sensor (direction sensor) 35 that is used as the relative position measurement unit.

As illustrated in Fig. 1 and Fig. 2, antennas 36a of the plurality of RF transmission and reception units 36 are attached onto the mobile station (truck) M, at positions separated from each other.

A RF transmission and reception unit 21 is included in the mobile terminal unit (Tag) 20 as a target object. When measurement signals are transmitted from the plurality of RF transmission and reception units 36 included in the mobile station M, the measurement signals are detected by the RF transmission and reception unit 21 of the mobile terminal unit 20, and a response signal is transmitted from the RF transmission and reception unit 21 of the mobile terminal unit 20. The measurement signals transmitted from the RF transmission and reception units 36 of the mobile station M are analog signals with sine waves. The RF transmission and reception unit 21 of the mobile terminal unit 20 reflects the received measurement signals and transmits the reflected signals as response signals. At each of the RF transmission and reception units 36 included in the mobile station M, a distance from the RF transmission and reception unit 36 to the RF transmission and reception unit 21 is measured from a phase difference (time difference) between the transmitted measurement signal and the received response signal.

The distance measurement is performed by the plurality of RF transmission and reception units 36, and measurement values are provided to the mobile control unit 31. The mobile control unit 31 calculates, from the measurement values obtained by the RF transmission and reception units 36, a relative position of the mobile terminal unit 20 in the relative coordinate system (Rel) set in the mobile station M. In other words, a position determination unit for measuring a relative position includes the RF transmission and reception units 36 and the RF transmission and reception unit 21.

As illustrated in Fig. 3, a barcode 16 is attached to a loading gate of the mobile station M. The barcode 16 is read by the barcode reader 13 carried by the driver H when the driver H gets on the mobile station M after getting out of the specified vehicle ma. The code of the barcode 16 is transmitted from the communication device 24 to the communication device 12 of the fixed station 10, and further transmitted to the fixed control unit 11, and thus, the mobile terminal unit 20 carried by the driver H and the mobile station M are associated with each other by the fixed control unit 11.

As illustrated in Fig. 3, a terminal control unit 23 and an inertial sensor 22 are mounted on the mobile terminal unit 20. The terminal control unit 23 includes mainly a CPU and a memory. The inertial sensor 22 may be a gyro sensor functioning as a direction sensor, a geomagnetic sensor functions as an attitude sensor, an acceleration sensor functions as a number-of-steps sensor, or the like. The mobile terminal unit 20 may further include a pressure sensor. Various information items measured by these sensors are provided to the mobile control unit 31 using the RF transmission and reception units 21 and 36, or other communication units.

Next, operations of measuring a position of the mobile terminal unit 20 as a target object in the position measurement apparatus 1 will be described.

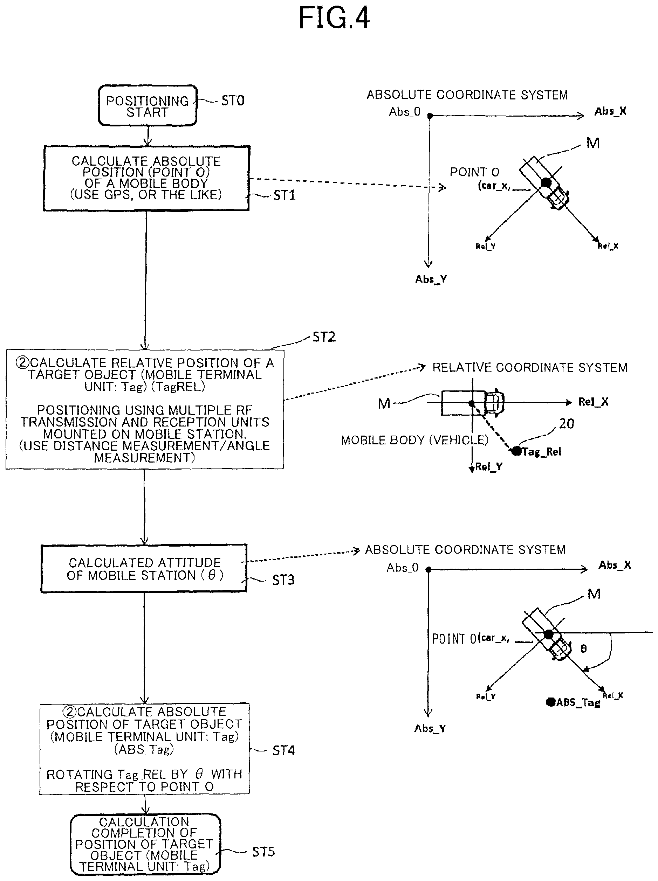

In flowcharts illustrated in Fig. 4, etc., each step is indicated by a (ST) code. Further, in Fig. 4 through Fig. 6, operations of the mobile station M and the mobile terminal unit 20 corresponding to each step (ST) are schematically depicted on the right side of the figure.

Fig. 4 illustrates basic operations for measuring an absolute position of the mobile terminal (target object) 20 in the measurement area 2.

While the driver H drives a specified vehicle ma and moving the specified vehicle to a certain parking space in the measurement area 2, the mobile station M is moved to and parked at near the parking space at which the moving vehicle ma is expected to be parked.

When the mobile station M is parked, the measurement is started in ST0 in Fig. 4. In this measurement operation, in ST1, detected outputs from the GPS module 33, the inertial sensor 35 and the vehicle speed sensor 34 included in the absolute position measurement unit mounted on the mobile station M, are provided to the mobile control unit 31. An absolute position (absolute coordinate position) of the mobile station M in the absolute coordinates system (Abs) having an origin (reference position) at a predetermined position in the fixed station 10 is calculated by the mobile control unit 31 from these detected outputs.

In ST2, a relative position of the mobile terminal unit 20 as the target object in the relative coordinate system (Rel) that is set with reference to the mobile station M, is calculated.

The measurement of the relative position is performed between the RF transmission and reception units 36 mounted on the mobile station M and the RF transmission and reception unit 21 of the mobile terminal unit 20, which are included in the relative position measurement unit. While the driver H carrying the mobile terminal unit 20 is driving the vehicle ma, the RF transmission and reception units 36 of the mobile station M are unable to detect existence of the mobile terminal unit 20 in the vehicle ma. After the vehicle ma is moved to a predetermined parking space and is parked at the parking space, when the driver H gets out of the vehicle ma, it becomes possible for the RF transmission and reception units 36 of the mobile station M to detect the response signal transmitted from the RF transmission and reception unit 21 of the mobile terminal unit 20. At this time, it becomes possible to calculate a relative position of the mobile terminal unit 20 as the target object in the relative coordinate system (Rel) that is set with reference to the mobile station M, by measuring distances from the plurality of RF transmission and reception units 36 to the RF transmission and reception unit 21.

It is possible for the mobile control unit 31 of the mobile station M to, based on the measurement of the relative position measurement unit, calculate a walking route (w) (refer to Fig. 1) of the driver H, as a trajectory in the relative coordinate system (Rel), for movement from getting out of the vehicle ma after parking until arriving at the mobile station M.

In ST3 illustrated in Fig. 4, an orientation of the mobile station M is detected. Here, the orientation of the mobile station M is detected by the inertial sensor (direction sensor) 35 that is a part of the relative position measurement unit, and a tilting angle θ of the relative coordinate system (Rel) with respect to the absolute coordinate system (Abs) is calculated. The absolute coordinates system (Abs) is set in the measurement area 2, and the relative coordinate system (Rel) is set with respect to the mobile station M.

In ST4, the relative coordinate system (Rel) is rotated by *θ* with respect to the origin in the absolute coordinates system (Abs), and thus, the relative coordinate system (Rel) is mapped to the absolute coordinates system (Abs). With the above operations, it is possible to determine the walking route (w) of the driver H in the absolute coordinates system (Abs). Therefore, in ST5, it is possible to detect the start point of the walking route (w) as a parking position of the vehicle ma.

Results of the above calculations are transmitted from the mobile station M to the fixed station 10 through communications between the communication devices 32 and 12. It is possible for the fixed control unit 11 to determine that the specified vehicle ma is parked at a predetermined parking space (e.g., Pi) and to record the determination.

It should be noted that, in Fig. 4, ST3 may be performed first to detect an orientation of the mobile station M in the absolute coordinates system (Abs), and at the same time, or after the orientation detection, ST2 may be performed to measure a relative position of the mobile terminal unit 20 in the relative coordinate system (Rel).

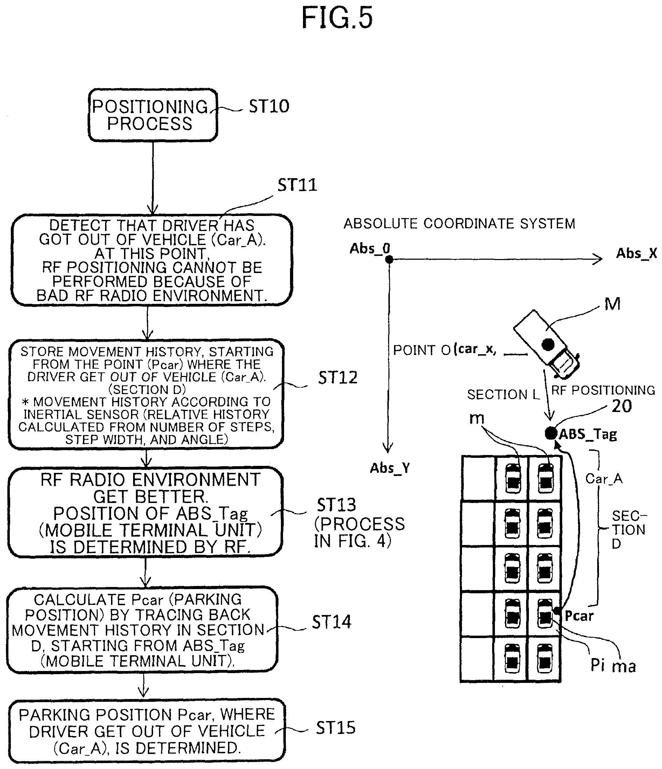

Fig. 5 illustrates further detailed operations for measuring an absolute position of the mobile terminal (target object) 20 in the measurement area 2.

In Fig. 2 and Fig. 5, the waling route (w) of the driver H, who has gotten out of the parked vehicle ma, is illustrated in a section D and a section L. The section D indicates a range in which relative positions of the mobile terminal unit 20 cannot be accurately measured because, viewing from the mobile station M, the walking driver H who has gotten out of the vehicle is blocked by many vehicles m that are parked in line, and accuracy of communications between the RF transmission and reception units 21 and 36 is degraded. The section L indicates a range in which positions of the mobile terminal unit 20 can be accurately determined by the RF transmission and reception units 21 and 36 because the driver H is at positions at which there is no obstacle between the driver H and the mobile station M.

While performing the basic measurement operations illustrated in Fig. 4, it becomes possible to detect the mobile terminal unit 20 in ST2 when the driver H gets out of the section D and gets into the section L. As a result, there is a possibility that the boundary between the section D and the section L is determined in error to be a parking position of the vehicle. Therefore, it is possible to always measure the parking position of the vehicle ma accurately by performing measurement operations illustrated in Fig. 5 in addition to the measurement operations illustrated in Fig. 4.

A measurement process ST10 illustrated in Fig. 5 is performed as an internal process of the mobile terminal unit 20. In ST11 illustrated in Fig. 5, it is detected that the driver H has gotten out of the vehicle ma. The above detection is performed by using the inertial sensor 22 or the pressure sensor mounted on the mobile terminal unit 20. When the attitude of the driver H is changed from a sitting attitude at the driver sheet to a standing attitude outside the vehicle, the attitude change is detected by an attitude sensor such as a geomagnetic sensor. Alternatively, when the driver H gets out of the vehicle and stands on the ground, the acceleration change may be detected by the acceleration sensor (number-of-steps sensor). Further alternatively, when the mobile terminal unit 20 moves from the inside the vehicle to the outside the vehicle, the pressure change may be detected by the pressure sensor. The terminal control unit 23 detects that the driver H has gotten out of the vehicle ma based on at least one of the detection outputs from the sensors.

In ST12, after detecting that the driver H has gotten out of the vehicle ma, a movement history of the driver H in the section D is calculated. The movement history is calculated by the terminal control 23 based on the detection outputs of the inertial sensor 22 as a direction sensor (gyro sensor), the attitude sensor (geomagnetic sensor), or the number-of-steps sensor (acceleration sensor), mounted on the mobile terminal unit 20. It should be noted that the step width of the driver H is stored as a fixed value in advance, and a walking distance is calculated from a value of the number of steps calculated by the number-of-steps sensor and the step width value. In ST12, the continuously measured movement history in the section D is sequentially stored in a memory.

When it becomes possible for the RF transmission and reception unit 21 to receive measurement signals from the RF transmission and reception units 36 and when it becomes possible for the RF transmission and reception units 36 to receive response signals from the RF transmission and reception unit 21, the operation proceeds to ST13. Here, the operation proceeds to the measurement start (ST0) illustrated in Fig. 4, after performing the steps ST1, ST2, ST4, which have been described above, it is possible to determine the position of the mobile terminal unit 20 in the absolute coordinates system (Abs) in ST5. It is limited to the section L where the movement history of the mobile terminal unit 20 can be calculated by using the RF transmission and reception units 21 and 36.

Therefore, in ST14, the movement history in the section D stored in the memory of the terminal control unit 23 is transmitted to the mobile control unit 31 through the RF transmission and reception units 21 and 36, or through other communication means. The mobile control unit 31 determines the position of the parking space (Pi) of the vehicle ma, which is a starting point of the section D, by tracing back the transmitted movement history in the section D (ST15). The parking position information is transmitted to the fixed control unit 11 of the fixed station 10 by using the communication devices 32 and 12.

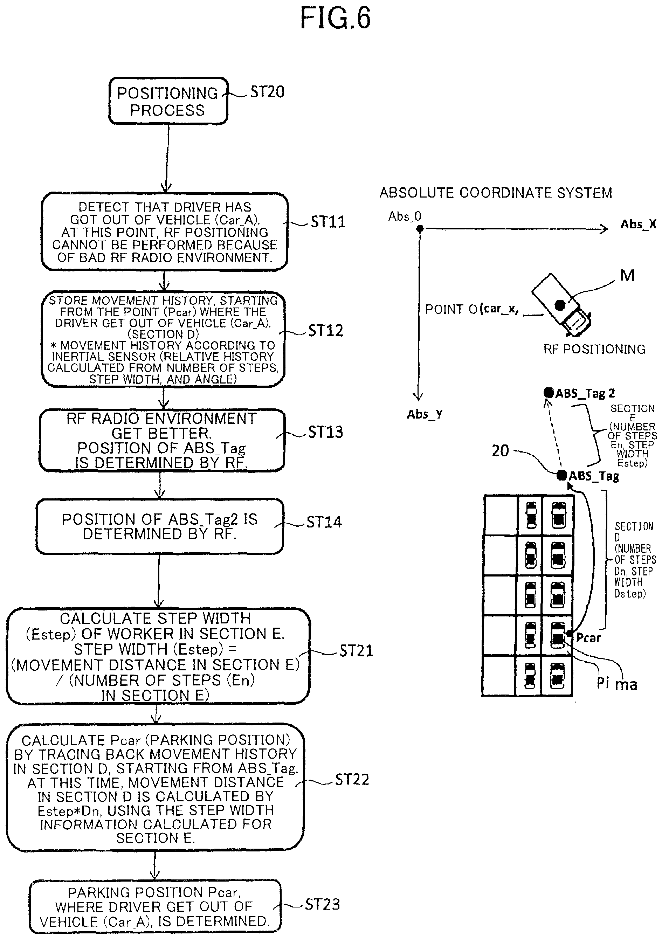

Fig. 6 illustrates operations for measuring more accurately an absolute position of the mobile terminal unit (target object) 20 in the measurement area 2.

In the measurement process ST20 illustrated in Fig. 6, operations from ST11 to ST14 are the same as the operations illustrated in Fig. 5. In other words, in ST11, it is detected that the driver H has gotten out of the vehicle ma, and in ST12, the movement history of the driver H is calculated in the section D in which measurement cannot be performed by the RF transmission and reception units 21 and 36, and the calculated movement history is stored in a memory. In the calculation of the movement history, detection outputs from the direction sensor and the attitude sensor are used, and further, the number of steps is measured by the number-of-steps sensor.

After communications of the measurement signals and the response signals between the RF transmission and reception units 21 and 36 are started in ST14, in a subsequent section E, the walking route of the driver H is detected and calculated using communications between the RF transmission and reception units 21 and 36.

In ST21, while the driver H walks in the section D towards the mobile station M, the number of steps in the section E is measured by using the number-of-steps sensor of the mobile terminal unit 20. Further, the step width of the driver H is calculated by (movement distance of the mobile terminal unit 20 in the section E measured by the RF transmission and reception units 31 and 36)/(the number of steps measured by the number-of-steps sensor).

In ST22 illustrated in Fig. 6, the same as in ST14 illustrated in Fig. 5, the position where the driver has gotten out of the vehicle ma is determined by tracing back the movement history, which has already been measured, in the section D. At this time, it is possible to accurately calculate the movement distance of the driver H in the section D by multiplying the number of steps in the section D, which has been measured in ST12, by the step width calculated in ST21.

With the above operations, in ST23, it is possible to accurately determine the position where the driver H has gotten out of the vehicle ma.

### [DESCRIPTION OF THE REFERENCE NUMERALS]

- 1: position measurement apparatus
- 2: measurement area
- 10: fixed station
- 13: barcode reader
- 20: mobile terminal unit
- 21, 36: RF transmission and reception unit
- 22, 35: inertial sensor
- 33: GPS module
- Abs: absolute coordinates system
- Rel: relative coordinate system
- H: driver
- M: mobile station
- m: vehicle

## Claims

1. A position measurement apparatus for determining a position of a target object arranged in a measurement area, the position measurement apparatus comprising:
a mobile station configured to move in the measurement area;
an absolute position measurement unit configured to measure an absolute position of the mobile station in the measurement area;
a relative position measurement unit configured to measure a relative position of the target object with respect to the mobile station,
wherein an absolute position of the target object in the measurement area is determined from a measurement value of the absolute position and a measurement value of the relative position.

2. The position measurement apparatus according to claim 1, wherein the absolute position measurement unit is a satellite positioning system mounted on the mobile station.

3. The position measurement apparatus according to claim 1 or 2, wherein the relative position measurement unit includes a direction sensor that detects an orientation of the mobile station and a position determination unit that determines a position of the target object in a relative coordinate system with respect to the mobile station.

4. The position measurement apparatus according to claim 3, wherein the position determination unit is RF transmission and reception units disposed between the mobile station and the target object.

5. The position measurement apparatus according to any one of claims 1 to 4, wherein the target object includes an inertial sensor, and a movement history of the target object in the measurement area is calculated from a relative position, measured by the relative position measurement unit, of the target object with respect to the mobile station and from movement information of the target object detected by the inertial sensor.

6. The position measurement apparatus according to claim 5, wherein the target object is a mobile terminal unit held by a person, a number of steps is measured by the inertial sensor, a step width of the person is calculated from the relative position, measured by the relative position measurement unit, of the target object with respect to the mobile station, and a movement distance of the mobile terminal unit in an area, in which the movement distance cannot be measured by the relative position measurement unit, is adjusted by the step width and the number of steps.

7. The position measurement apparatus according to claim 6, wherein the person is a driver who drives a vehicle in the measurement area, the mobile station is a truck that carries the driver who has got out of the vehicle, and a parking position of the vehicle is determined by measuring a position of the mobile terminal unit held by the driver who has got out of the vehicle.
